# DEMANDE DE BREVET EUROPEEN

(11) **EP 1 619 009 A1**
(43) Date de publication de la demande: **25.01.2006**
(21) Numéro de dépôt: 04291837.5
(22) Date de dépôt: 19.07.2004
(51) Int. Cl.: B29C 65/50, E04F 15/02, B29C 59/04

(54) **Procédé de fabrication d'un cordon de soudure**

(71) Demandeur: Tarkett SAS, 92000 Nanterre (FR)
(72) Inventeur: Georges, Jean-Philipe, 6637 Fauvilliers (BE); De Roeck, Herwig, 08090 Aiglemont (FR)
(74) Mandataire: Kihn, Pierre Emile Joseph

(57) **Abrégé**

Procédé de fabrication d'un cordon de soudure destiné à souder deux éléments d'un premier revêtement en une première matière thermoplastique, ledit procédé comprenant les étapes consistant à:
- mettre à disposition une bande (10,12) d'un élément d'un deuxième revêtement en une deuxième matière synthétique, ladite bande ayant une surface supérieure et une surface inférieure, ledit deuxième revêtement présentant un aspect similaire ou identique au premier revêtement;
- déformer ladite surface supérieure et/ou inférieure de ladite bande de sorte à transformer ladite bande en une pluralité de cordons de soudure (26) reliés entre eux sur un côté longitudinal;
- séparer ladite pluralité de cordons de soudure (26) afin d'en faire des cordons de soudure individuels (26).

## Description

### Introduction

La présente invention concerne un procédé de fabrication d'un cordon de soudure, en particulier pour souder deux éléments de revêtement.

Il est connu de souder des éléments de revêtement de sol, tels que vinyles ou autres revêtements de sol plastique (voire du linoléum) en dalles ou en lés, à l'aide de cordons de soudure. Ces cordons de soudure sont généralement fabriqués par extrusion d'une formulation peu ou pas chargée, hautement plastifiée et colorée, à travers une tête de forme ronde pour former un cordon de soudure cylindrique. Les formulations utilisées sont en général des mélanges de polymères ou copolymères amenant une grande flexibilité et un pouvoir collant, à des températures plus basses que celles des formulations des éléments de revêtement. Après soudure, les cordons de soudure sont généralement facilement arasables. Les cordons de soudure sont en général colorés dans la teinte dominante du revêtement pour minimiser la visibilité du joint entre les éléments de revêtement.

Les éléments de revêtement comprennent souvent des décors multicolores. Afin de garantir la continuité du décor sur toute la surface du revêtement, il est alors souhaité de reprendre le décor de l'élément de revêtement également dans le cordon de soudure.

Le cordon de soudure obtenu par le procédé décrit ci-dessus est un cordon qui peut être coloré dans la teinte dominante des éléments de revêtement. Il n'est par contre pas possible de fabriquer un cordon de soudure multicolore se rapprochant ou dupliquant l'aspect décoratif du revêtement de sol. En effet, l'ajout de différents pigments ou de grains de différentes couleurs correspondant aux couleurs du revêtement à souder dans l'extrudeuse mènerait immanquablement à une dispersion grossière de ces couleurs sans aucun rapport avec le décor en lui-même.

Les procédés connus ne permettent donc pas de fabriquer des cordons de soudure avec lesquels il est possible d'obtenir un revêtement dans lequel on ne voit presque pas les joints entre les éléments de revêtement, en particulier si le revêtement comprend un décor.

### Objet de l'invention

L'objet de la présente invention est dès lors de proposer un procédé de fabrication d'un cordon de soudure, dans lequel le cordon de soudure reprend l'apparence des éléments de revêtement à souder.

### Description générale de l'invention

Conformément à l'invention, cet objectif est atteint par un procédé de fabrication d'un cordon de soudure destiné à souder (ensemble) deux éléments d'un premier revêtement en une première matière thermoplastique, ledit procédé comprenant les étapes consistant à :
- mettre à disposition une bande d'un élément d'un deuxième revêtement en une deuxième matière synthétique, ladite bande ayant une surface supérieure et une surface inférieure, ledit deuxième revêtement présentant un aspect décoratif similaire ou identique au premier revêtement;
- déformer ladite surface supérieure et/ou inférieure de ladite bande de sorte à transformer ladite bande en une pluralité de cordons de soudure reliés entre eux sur un côté longitudinal ;
- séparer ladite pluralité de cordons de soudure afin d'en faire des cordons de soudure individuels.

Selon le procédé de la présente invention, le cordon de soudure est fabriqué directement à partir d'un élément d'un deuxième revêtement ayant un aspect décoratif similaire ou identique au premier revêtement. Par aspect décoratif similaire, on entend un design quasiment identique, c.-à-d. que les couleurs et l'aspect du cordon de soudure seront quasiment identiques à ceux du premier revêtement. En particulier, dans le cas d'éléments de revêtement multicolores, le cordon de soudure sera également multicolore et les couleurs correspondent aux couleurs de l'élément de revêtement. Ainsi, lorsque l'élément de revêtement comprendra un changement soudain de couleur, ce changement soudain sera également présent dans le cordon de soudure.

Le cordon de soudure, fabriqué selon le procédé revendiqué, permet de poser un revêtement dans lequel on ne voit presque pas le joint entre deux éléments de revêtement puisque la teinte et le design des éléments de revêtement sont repris de manière similaire voire identique dans les cordons de soudure. Plus particulièrement, ceci est également vrai si le revêtement comporte un décor puisque le décor des éléments de revêtement est également repris quasi identiquement dans les cordons de soudure.

Le procédé selon l'invention permet donc de fabriquer des cordons de soudure ayant dans tous les cas une apparence très similaire voire identique aux éléments du premier revêtement, c'est-à-dire identique aux éléments de revêtement à souder.

De préférence, le procédé comprend en outre l'étape consistant à appliquer sur les cordons de soudure une enduction transparente améliorant la soudabilité. Une telle enduction permet d'améliorer la cohésion entre le cordon de soudure et les éléments de revêtement à souder. Ceci est particulièrement intéressant lorsque les éléments de revêtement à souder, et les cordons de soudure, sont fortement chargés, dans quel cas l'adhérence entre le cordon de soudure et les éléments de revêtement à souder risquerait d'être insuffisante. Grâce à l'enduction transparente, l'adhérence du cordon de soudure aux éléments de revêtement à souder est donc assurée. La propriété transparente de l'enduction permet de maintenir l'aspect multicolore du cordon de soudure.

L'enduction transparente peut être une formule à base de vinyle acétate. Dans le cas d'un cordon de soudure en PVC, on utilise de préférence une formule à base de vinyle acétate non chargée comme enduction transparente.

L'enduction transparente peut être une colle réticulable et réactivable. Suivant le type de matière utilisé, l'enduction pourra être réchauffée ou réticulée (UV ou EB) pour devenir solide et non collante.

L'enduction transparente peut être appliquée par immersion du cordon de soudure dans un bain chaud ou froid ou par pulvérisation.

Lors de la soudure à chaud du cordon de soudure, l'enduction transparente est activée et améliore la tenue entre le cordon de soudure et les éléments de revêtement. Après soudure, on obtient une cohésion entre les éléments de revêtement qui est du même niveau que celle obtenue avec un cordon de soudure standard extrudé et on obtient aussi un niveau d'encrassement semblable.

L'étape consistant à déformer la surface supérieure et/ou inférieure de la bande est de préférence réalisée par gaufrage et la bande est de préférence chauffée avant gaufrage. La bande réchauffée est gaufrée entre deux cylindres présentant face-à-face un grain en forme de demi-rond dont la profondeur est substantiellement égale à la moitié de l'épaisseur de la bande. Ainsi, on obtient une pluralité de cordons de soudure de forme arrondie de diamètre égal à l'épaisseur du revêtement et présentant un décor correspondant à celui de l'élément de revêtement à souder.

En alternative, la déformation de la surface supérieure et/ou inférieure de la bande peut être réalisée par grainage.

Selon un mode de réalisation, le procédé comprend les étapes consistant à mettre à disposition au moins une bande supplémentaire d'un élément de revêtement, l'au moins une bande supplémentaire ayant une surface supérieure et une surface inférieure, à mettre une surface de l'au moins une bande supplémentaire en contact avec une surface de la bande et à connecter les bandes avant de déformer la surface supérieure et/ou inférieure de la bande et/ou de l'au moins une bande supplémentaire. Ceci permet de former un cordon de soudure ayant un diamètre supérieur à l'épaisseur d'un élément de revêtement. Dans certains cas, l'utilisation d'un cordon de soudure dont le diamètre est par exemple le double de l'épaisseur d'une bande, resp. de l'élément de revêtement à souder, est désiré. En superposant deux bandes, on obtient un cordon de soudure ayant un diamètre double à l'épaisseur d'un élément de revêtement à souder. La connexion entre les bandes peut par exemple se faire par une opération de doublage à chaud.

Notons également que la pose de revêtement à l'aide du cordon de soudure fabriqué selon le procédé de la présente invention se fait par le même procédé et le même matériel que la pose de revêtement à l'aide du cordon de soudure extrudé. Il n'est donc pas nécessaire de changer le procédé ou le matériel de pose.

Selon un mode de réalisation préféré, le premier et le deuxième revêtement sont identiques. La mise à disposition d'une bande d'un élément de deuxième revêtement, pour la fabrication des cordons de soudure, est alors de préférence une découpe d'une bande d'un élément de premier revêtement. Ceci implique qu'on se sert directement des éléments de revêtement à souder pour fabriquer les cordons de soudure.

Afin d'améliorer la soudabilité du cordon, la première matière synthétique présente un point de fusion qui est de préférence supérieur de 20°C au moins par rapport au point de fusion de la deuxième matière synthétique.

La première et/ou deuxième matière synthétique est avantageusement choisie dans le groupe constitué des PVC, polyoléfines, caoutchouc ou autres polymères thermoplastiques chargés ou non.

Afin de minimiser les différences entre le cordon de soudure et le revêtement à souder, les deux revêtements (c.-à-d. le revêtement) à souder sont obtenus selon le même procédé.

Selon un autre aspect de la présente invention, on propose également un cordon de soudure qui est obtenu selon le procédé décrit ci-dessus.

Par ailleurs, la présente invention concerne également un procédé pour souder deux éléments de revêtement. Le procédé comprend les étapes suivantes :
- poser les deux éléments de revêtement côte à côte,
- insérer un cordon de soudure obtenu selon le procédé décrit précédemment entre les deux éléments de revêtement,
- chauffer le cordon de soudure afin de souder les deux éléments de revêtement.

### Description à l'aide des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
- Fig.1 :: une vue schématique d'un procédé de fabrication de cordons de soudure selon un premier mode de réalisation de l'invention ; et
- Fig.2:: une vue schématique d'un procédé de fabrication de cordons de soudure selon un deuxième mode de réalisation de l'invention.

Sur les figures, les mêmes références désignent des éléments identiques ou similaires.

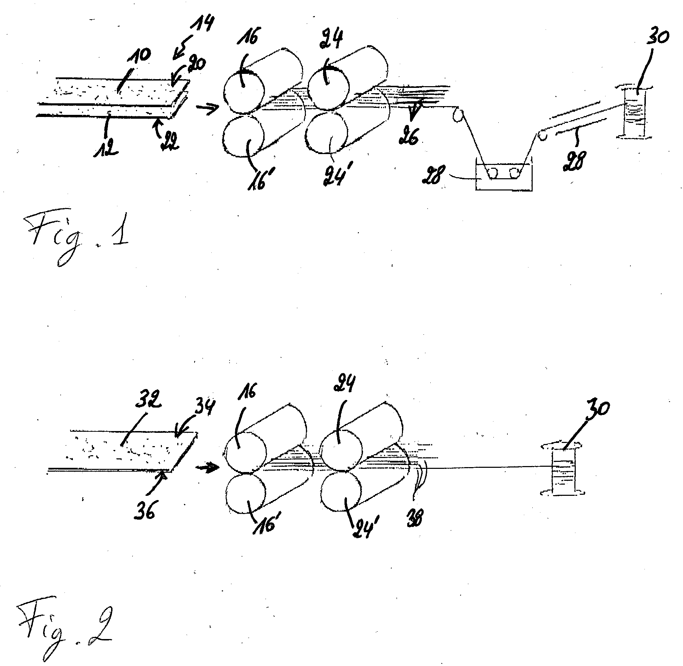

Selon un premier mode de réalisation de l'invention, illustré en Fig.1, deux bandes 10, 12 coupées d'un élément de revêtement à souder (non représenté) sont superposées et laminées par une opération de doublage à chaud. La bande laminée 14 obtenue passe ensuite entre deux cylindres de gaufrage 16, 16' présentant face-à-face un grain en forme de demi-rond dont la profondeur est substantiellement égale à la moitié de l'épaisseur de la bande laminée 14. Les surfaces supérieure 20 et inférieure 22 de la bande laminée 14 sont ainsi déformées de sorte à transformer la bande laminée 14 en une pluralité de cordons de soudure reliés entre eux sur un côté longitudinal. Cette pluralité de cordons de soudure est ensuite coupée entre deux cylindres de découpe 24, 24' afin d'en faire des cordons de soudure individuels 26. Ainsi, on obtient une pluralité de cordons de soudure 26 de forme arrondie de diamètre égal à l'épaisseur de la bande laminée 14. Puisque les cordons de soudure 26 sont fabriqués à partir de bandes 10, 12 coupées d'un élément de revêtement à souder, ils présentent un décor identique à celui des éléments de revêtement à souder.

Les cordons de soudure individuels 26 traversent ensuite un bain 26 comprenant une colle réticulable, réactivable et transparente afin d'enrober les cordons de soudure individuels 26 d'une enduction transparente. Une telle enduction transparente appliquée sur les cordons de soudure 26 permet d'améliorer la cohésion entre le cordon de soudure et les éléments de revêtement à souder. Ceci est particulièrement intéressant lorsque les éléments de revêtement à souder, et par conséquent les cordons de soudure, sont fortement chargés, dans quel cas l'adhérence entre le cordon de soudure et les éléments de revêtement à souder risquerait d'être insuffisante. La propriété transparente de l'enduction permet de maintenir l'aspect multicolore du cordon de soudure.

En général, dans l'art de souder des éléments de revêtement en matière thermoplastique, les cordons de soudure ont un diamètre supérieur à - généralement le double de - l'épaisseur des éléments de revêtement à souder. Un tel diamètre est obtenu grâce au laminage de deux bandes.

Les cordons de soudure 26 passent ensuite à travers une unité de refroidissement 28 et sont finalement enroulés sur bobines 30 pour usage ultérieur.

Selon un deuxième mode de réalisation de l'invention, illustré en Fig.2, on créé une bande 32 en matière plastique d'une composition différente que les éléments de revêtement à souder. On fait passer la bande 32 entre deux cylindres de gaufrage 16, 16' présentant face-à-face un grain en forme de demi-rond dont la profondeur est substantiellement égale à la moitié de l'épaisseur de la bande 32. Les surfaces supérieure 34 et inférieure 36 de la bande 32 sont ainsi déformées de sorte à transformer la bande 32 en une pluralité de cordons de soudure reliés entre eux sur un côté longitudinal. Cette pluralité de cordons de soudure est ensuite coupée entre deux cylindres de découpe 24, 24' afin d'en faire des cordons de soudure individuels 38. Finalement, les cordons de soudure 38 sont enroulés sur bobines 30 pour usage ultérieur. On obtient ainsi des cordons de soudure 38 de forme arrondie de diamètre égal à l'épaisseur de la bande 32. Dans ce mode de réalisation, le diamètre des cordons de soudure supérieur à l'épaisseur des éléments de revêtement à souder peut être obtenu en créant une bande 32 plus épaisse que le revêtement à souder.

La bande 32 en matière plastique d'une composition différente que les éléments de revêtement à souder comprend un aspect décoratif similaire à celui des éléments de revêtement à souder. Les cordons de soudure 38 fabriqués à partir de la bande 32 ont par conséquent un décor similaire à celui des éléments de revêtement à souder.

La bande 32 peut être formée d'une matière synthétique avec un point de fusion inférieur - de préférence d'au moins 20°C - par rapport au point de fusion de la matière synthétique utilisée pour les éléments de revêtement à souder. Ceci implique que l'adhérence entre le cordon de soudure et les éléments de revêtement à souder ne risque pas d'être insuffisante et que l'application d'une enduction transparente n'est pas nécessaire.

Les formulations suivantes peuvent être utilisées pour fabriquer des cordons de soudure :

### Exemple 1 :

| | |
|---|---|
| Lacovyl 1384 (PVC) | 100 parties en poids |
| DIHP (platiziser) | 55 parties en poids |
| Baroskab CT 9158 (stabilisateur) | 5 parties en poids |
| HSE (processing aid) | 4 parties en poids |

### Exemple 2 :

| | |
|---|---|
| Lacovyl 1384 (PVC) | 48 parties en poids |
| DIHP (platiziser) | 18 parties en poids |
| Baroskab CT 9158 (stabilisateur) | 5 parties en poids |
| HSE (processing aid) | 0.8 parties en poids |
| Filler (CaCO₃) | 32 parties en poids |

## Revendications

1. Procédé de fabrication d'un cordon de soudure destiné à souder deux éléments d'un premier revêtement en une première matière thermoplastique, ledit procédé comprenant les étapes consistant à :
- mettre à disposition une bande d'un élément d'un deuxième revêtement en une deuxième matière synthétique, ladite bande ayant une surface supérieure et une surface inférieure, ledit deuxième revêtement présentant un aspect similaire ou identique au premier revêtement;
- déformer ladite surface supérieure et/ou inférieure de ladite bande de sorte à transformer ladite bande en une pluralité de cordons de soudure reliés entre eux sur un côté longitudinal ;
- séparer ladite pluralité de cordons de soudure afin d'en faire des cordons de soudure individuels.

2. Procédé selon la revendication 1, comprenant en outre l'étape consistant à appliquer sur lesdits cordons de soudure une enduction transparente améliorant la soudabilité.

3. Procédé selon la revendication 2, dans lequel ladite enduction transparente est une formule à base de vinyle acétate.

4. Procédé selon la revendication 2, dans lequel ladite enduction transparente est une colle réticulable et réactivable.

5. Procédé selon l'une des revendications 2 à 4, dans lequel ladite enduction transparente est appliquée par immersion dudit cordon de soudure dans un bain chaud ou froid.

6. Procédé selon l'une des revendications 2 à 4, dans lequel ladite enduction transparente est appliquée par pulvérisation.

7. Procédé selon l'une des revendications 1 à 6, dans lequel ladite étape consistant à déformer ladite surface supérieure et/ou inférieure de ladite bande est réalisée par gaufrage.

8. Procédé selon la revendication 7, dans lequel ladite bande est chauffée avant gaufrage.

9. Procédé selon l'une des revendications 1 à 6, dans lequel ladite étape consistant à déformer ladite surface supérieure et/ou inférieure de ladite bande est réalisée par grainage.

10. Procédé selon l'une des revendications 1 à 9, comprenant les étapes consistant à :
- mettre à disposition au moins une bande supplémentaire d'un élément de revêtement, ladite au moins une bande supplémentaire ayant une surface supérieure et une surface inférieure, et
- mettre une surface de ladite au moins une bande supplémentaire en contact avec une surface de ladite bande et connecter les bandes avant de déformer ladite surface supérieure et/ou inférieure de ladite bande et/ou de ladite au moins une bande supplémentaire.

11. Procédé selon l'une quelconque des revendications précédentes, **caractérisé en ce que** le premier et le deuxième revêtement sont identiques.

12. Procédé selon l'une quelconque des revendications précédentes, **caractérisé en ce que** la première matière synthétique présente un point de fusion qui est supérieur de 20°C au moins par rapport à la deuxième matière synthétique.

13. Procédé selon l'une quelconque des revendications précédentes, **caractérisé en ce que** la première et/ou deuxième matière synthétique est choisie dans le groupe constituée des PVC, polyoléfines, caoutchouc ou autres polymères thermoplastiques chargés ou non.

14. Procédé selon l'une quelconque des revendications précédentes, **caractérisé en ce que** les deux revêtements sont obtenus selon le même procédé.

15. Cordon de soudure obtenu selon le procédé de l'une quelconque des revendications précédentes.

16. Procédé pour souder deux éléments de revêtement, comprenant les étapes suivantes :
• poser les deux éléments de revêtement côte à côte,
• insérer un cordon de soudure obtenu selon l'une quelconque des revendications 1-14 entre les deux éléments de revêtement,
• chauffer le cordon de soudure afin de souder les deux éléments de revêtement.
